# EUROPÄISCHE PATENTANMELDUNG

(11) **EP 1 119 065 A2**
(43) Veröffentlichungstag der Anmeldung: **25.07.2001**
(21) Anmeldenummer: 00125948.0
(22) Anmeldetag: 28.11.2000
(51) Int. Cl.: H01M 8/04

(54) **Brennstoffzellensystem**

(30) Priorität: 18.01.2000 DE 10001717
(71) Anmelder: XCELLSIS GmbH, 73230 Kirchheim / Teck-Nabern (DE)
(72) Erfinder: Sang, Jochen, 73230 Kirchheim/T. (DE)
(74) Vertreter: Kocher, Klaus-Peter Dipl.-Phys

(57) **Zusammenfassung**

Die Erfindung bezieht sich auf ein Brennstoffzellensystem mit wenigstens einer Brennstoffzelleneinheit, die in einer Brennstoffzellenbox untergebracht ist und/oder der eine Kathodengas- oder Kaltstartgas-Zufuhrleitung oder eine Kathodenabgas- oder Anodenabgasrückführleitung zugeordnet ist.

Erfindungsgemäß ist das System mit wenigstens einem Coanda-Strömungsverstärker ausgerüstet, um den Luftstrom für die Belüftung einer Brennstoffzellenbox, einen Kathodengasstrom oder einen Kaltstartgasstrom, einen rückgeführten Kathodenabgasstrom oder einen rückgeführten Anodenabgasstrom zu verstärken und/oder das System ist mit einem Belüftungsmittel für ein Gehäuse außerhalb der Brennstoffzellenbox, in welchem Komponenten des Brennstoffzellensystems zusammengefaßt sind, ausgerüstet, wobei die Belüftungsmittel einen Coanda-Strömungsverstärker aufweisen.

Verwendung z.B. in Brennstoffzellenfahrzeugen.

## Beschreibung

Die Erfindung bezieht sich auf ein Brennstoffzellensystem mit wenigstens einer Brennstoffzelleneinheit. Insbesondere bezieht sich die Erfindung auf solche Brennstoffzellensysteme, bei denen die eine oder mehreren Brennstoffzelleneinheiten in eine Brennstoffzellenbox eingebracht sind und/oder der wenigstens einen Brennstoffzelleneinheit eine Kathodengas- und/oder Kaltstartgas-Zufuhrleitung und/oder eine Kathodenabgasrückführleitung und/oder eine Anodenabgasrückführleitung zugeordnet sind. Derartige Brennstoffzellensysteme sind z.B. in Brennstoffzellenfahrzeugen im Einsatz.

Soweit in herkömmlichen Brennstoffzellensystemen eine Zu- oder Abführung von Gasströmen durch einen Gasstromantrieb vorgesehen ist, erfolgt dies üblicherweise durch Lüfter, Gebläse, Ventilatoren, Verdichtern und Kompressoren.

Auf anderen Fachgebieten ist die Verwendung von Coanda-Strömungsverstärkern bekannt, die durch Zuführung eines antreibenden Strömungsmediums mit relativ hohem Druck in relativ geringer Kenge eine Strömung eines weiteren Strömungsmediums mit relativ niedrigem Druck, jedoch hohem Strömungsvolumen unter Ausnutzung des Coanda-Effektes treiben können, wozu der düsenspaltartig gestaltete Coanda-Strömungsverstärker eine geeignete innere oder auch äußere Strömungswandfläche für die Wandströmung des unter höherem Druck zugeführte, antreibende Medium aufweist.

Derartige Coanda-Strömungsverstärker werden z.B. von der Firma EXAIR Corp. als Luftverstärker und auch von anderen Anbietern unter dem Begriff "air amplifier" vertrieben, deren abgegebene Luftströmung zum Kühlen, Trocknen, Reinigen oder Belüften dienen kann, oder deren angesaugte Luftströmung zum Absaugen von Abgasen, Dämpfen, Rauch und Stäuben dienen kann. Die Offenlegungsschrift WO 98/32964 offenbart eine Brennkraftmaschine mit Abgasrückführung, in deren Abgasrückführleitung ein Coanda-Strömungsverstärker vorgesehen ist, der mit seinem Hochdruckanschluß an die Druckluftquelle eines Druckluft-Bremssystems eines Kraftfahrzeuges angeschlossen ist. Eine spezielle Gestaltung eines Coanda-Strömungsverstärkers zur Erzeugung einer helixartigen Fluidströmung ist in der Patentschrift EP 0 456 931 Bl angegeben.

Der Erfindung liegt als technisches Problem die Bereitstellung eines Brennstoffzellensystems der eingangs genannten Art zugrunde, das mit vergleichsweise wenig elektrisch anzutreibenden Komponenten auskommt.

Die Erfindung löst dieses Problem durch die Bereitstellung eines Brennstoffzellensystems mit den Merkmalen des Anspruchs 1, 2, 4 oder 5. Erfindungsgemäß ist das Brennstoffzellensystem mit einem oder mehreren Coanda-Strömungsverstärkern ausgerüstet. Beim System nach Anspruch 1 befindet sich ein Coanda-Strömungsverstärker speziell in einer Spülgasleitung, über die Spülluft in eine Brennstoffzellenbox eingeleitet und aus dieser abgeführt werden kann, um selbige zu belüften. Gemäß Anspruch 2 ist ein Coanda-Strömungsverstärker speziell in einer Zufuhrleitung zur Zuführung eines kathodenseitigen Gasstroms in die Brennstoffzelle und/oder in einer Zufuhrleitung angeordnet, über die ein Kaltstartgas der wenigstens einen Brennstoffzelleneinheit zugeführt wird, wobei das Kaltstartgas zur Speisung einer Kaltstartkomponente dient, mit der das System bei einem Kaltstart möglichst schnell auf Betriebstemperatur gebracht wird. Beim System nach Anspruch 4 ist ein Coanda-Strömungsverstärker speziell in einer Kathodenabgasrückführleitung vorgesehen, über die wenigstens ein Teil des Kathodenabgases zur Kathodeneintrittsseite zurückgeführt werden kann, was die Wasserbilanz des Systems verbessert. Beim Brennstoffzellensystem von Anspruch 5 ist ein Coanda-Strömungsverstärker speziell in einer Anodenabgasrückführleitung angeordnet und mit einem Druckgaseinlaß an einen -Gasspeicher angeschlossen, in welchem der eingesetzte Brennstoff unter Druck bevorratet ist, z.B. Wasserstoff.
In einer Weiterbildung der Erfindung nach Anspruch 3 ist dem Coanda-Gasverstärker, der sich in der Kathodengas- und/oder Kaltstartgas-Zufuhrleitung befindet, auf seiner Druckseite ein Hochdruckverdichter vorgeschaltet, der das im Coanda-Strömungsverstärker zur Gasverstärkung dienende, antreibende Gas auf einen ausreichenden Druck bringt.

Vorteilhafte Ausführungsformen der Erfindung sind in den Zeichnungen dargestellt und werden nachfolgend beschrieben. Hierbei zeigen:
- Fig. 1: ein schematisches Blockdiagramm eines Brennstoffzellensystems mit belüftbarer Brennstoffzellenbox und Coanda-Strömungsverstärker in der zugehörigen Spülluftleitung,
- Fig. 2: eine schematische Darstellung des Einsatzes eines Coanda-Strömungsverstärkers für eine Kaltstartkomponente eines Brennstoffzellensystems,
- Fig. 3: eine schematische Darstellung einer Brennstoffzelle mit teilweiser, von einem Coanda-Strömungsverstärker getriebener Kathodenabgasrückführung und
- Fig. 4: eine schematische Darstellung einer Brennstoffzelle mit von einem Coanda-Strömungsverstärker getriebener Anodengaszirkulierung.

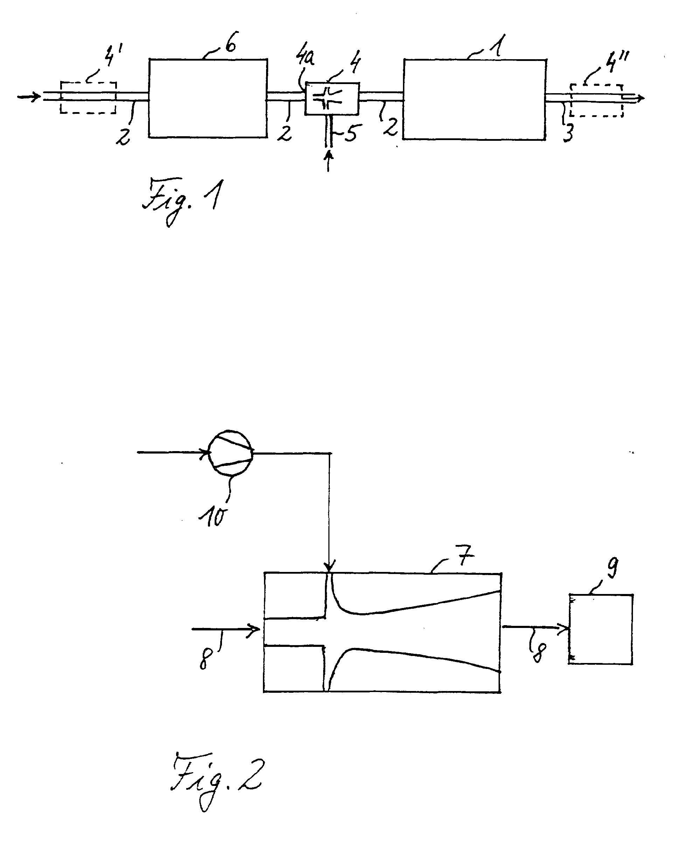

Fig. 1 veranschaulicht ein Brennstoffzellensystem mit einer oder mehreren Brennstoffzelleneinheiten bzw. -modulen, die in einer umgebenden, weitestgehend geschlossenen Brennstoffzellenbox 1 angeordnet sind. Dieser Box 1 sind Belüftungsmittel zugeordnet, durch die sie mit Spülluft belüftet werden kann, insbesondere zu dem Zweck, eine Anreicherung von eventuell leckbedingt aus einem Brennstoffzellenmodul austretendem Wasserstoff im Boxvolumen zu vermeiden.

Dazu beinhalten die Boxbelüftungsmittel eine in die Box 1 einmündende Spülgaszufuhrleitung 2 und eine an der gegenüberliegenden Seite oder an geeigneter Stelle aus der Box 1 ausmündende Spülgasauslaßleitung 3. In der Spülgaszufuhrleitung 2 befindet sich ein Coanda-Strömungsverstärker 4, der hochdruckseitig an eine Druckluftleitung 5 angeschlossen ist, über die Spülluft z.B. in Form von Leckluft des Systems oder Überströmluft eines Hochdruckverdichters des Systems oder von einer anderen Druckluftquelle des Systems zugeführt werden kann. Unter der Coanda-Wirkung der eingespeisten Druckluft saugt der Coanda-Strömungsverstärker 4 an seiner Saugseite 4a Spülluft mit hohem Strömungsvolumen aus der Umgebung an. Im gezeigten Beispiel ist in der Spülgaszufuhrleitung 2 vor dem Coanda-Strömungsverstärker 4 noch eine weitere Box 6 vorgesehen, in der periphere Komponenten des Brennstoffzellensystems untergebracht sind und die dadurch ebenfalls belüftet wird.

Alternativ zu der gezeigten Anordnung des Coanda-Strömungsverstärkers 4 zwischen den beiden Boxen 1, 6 kann ein Coanda-Strömungsverstärker 4' im Abschnitt der Spülgaszufuhrleitung 2 stromaufwärts der Peripherie-Box 6 oder ein Coanda-Strömungsverstärker 4'' in der Spülgasauslaßleitung 3 der Brennstoffzellenbox 1 vorgesehen sein, wie in Fig. 1 jeweils gestrichelt angedeutet. In jedem Fall läßt sich eine Anreicherung von Leck-Wasserstoff in der Brennstoffzellenbox 1 und damit in den in ihr angeordneten Brennstoffzellenmodulen durch das Spülen mit Luft wirksam verhindern, das allein vom Coanda-Strömungsverstärker 4, 4', 4'' getrieben werden kann, ohne daß elektrische Strömungsantriebskomponenten zwingend erforderlich sind.

Die Boxen 1 und 5 können auch vertauscht angeordnet sein.

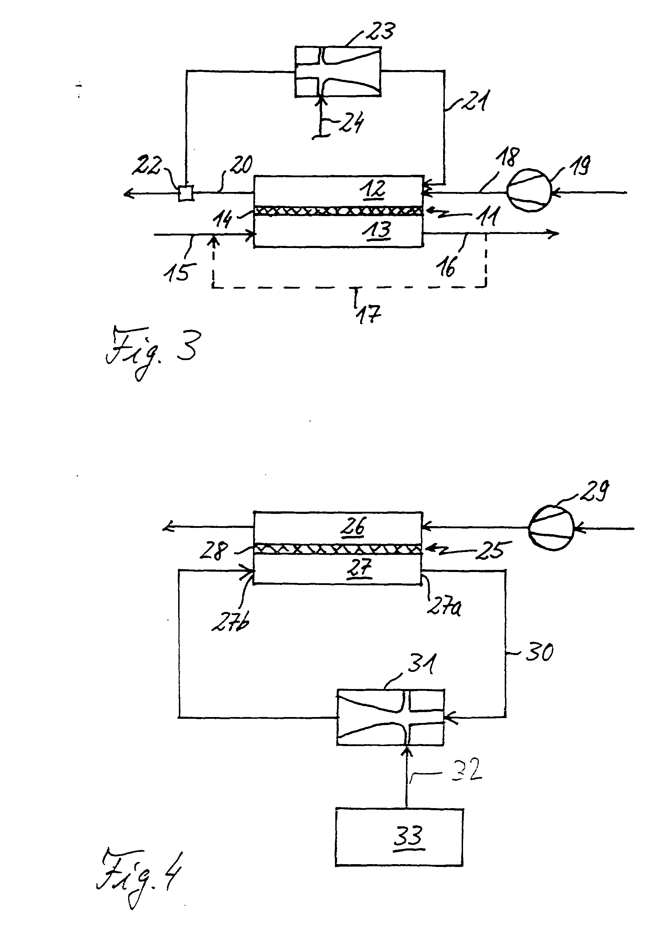

Fig. 2 veranschaulicht die Anwendung eines Coanda-Strömungsverstärkers 7 zu dem Zweck, einen Kaltstartgasstrom 8 zu verstärken, der einer Kaltstartkomponente 9 eines Brennstoffzellensystems zu dem Zweck zugeführt wird, das System bei einem Kaltstart möglichst schnell auf Betriebstemperatur zu bringen, wie dem Fachmann an sich geläufig. Dabei kann es sich z.B. um eine vermehrte Kathodenluftzufuhr und/oder um die Zufuhr eines speziell während der Kaltstartphase zu verwendenden Gasgemischs handeln. Im gezeigten Beispiel wird die Verstärkung des Kaltstartgasstroms 8 von dem Coanda-Strömungsverstärker 7 dadurch bewirkt, daß seiner Hochdruckseite von einem Hochdruckverdichter 10 auf ausreichend hohen Druck verdichtete Umgebungsluft zugeführt wird. Insbesondere für kleinere Brennstoffzellensysteme kann die Kathodenluftzufuhr auch im warmgelaufenen Systemzustand auf Wunsch allein mit der Anordnung von Fig. 2 erfolgen, wobei dann der vom Coanda-Strömungsverstärker 7 die Funktion eines herkömmlichen Kathodenzuluftverdichters übernimmt.

Fig. 3 veranschaulicht schematisch eine Brennstoffzelle 11 mit einer Kathodenseite 12, einer Anodenseite 13 und einer zwischenliegenden Membran 14. Der Anodenseite wird über eine Brenngaszufuhrleitung 15 ein Brenngas zugeführt, z.B. Wasserstoff. Das über eine Auslaßleitung 16 abgeführte Anodenabgas kann bei Bedarf wenigstens teilweise zur Anodeneintrittsseite rückgeführt werden, wie mit einer gestrichelt gezeichneten Anodenabgasrückführleitung 17 angedeutet.

Der Kathodenseite 12 wird Zuluft aus der Umgebung über eine Zufuhrleitung 18 unter Druck zugeführt, wozu ein Verdichter 19 vorgesehen ist. Außerdem wird ein Teil des über eine Kathodenabgasleitung 20 austretenden Kathodenabgases zur Kathodeneintrittsseite rückgeführt, wozu eine entsprechende Kathodenabgasrückführleitung 21 dient, die über ein schaltbares Ventil 22 von der Kathodenabgasleitung 20 abzweigt. In der Kathodenabgasrückführleitung 21 befindet sich ein Coanda-Strömungsverstärker 23, der hochdruckseitig an eine Druckluftleitung 24 einer nicht näher gezeigten Druckluftquelle des Systems angeschlossen ist.

In dieser Systemrealisierung bewirkt der Coanda-Strömungsverstärker 23 einen Gasströmungsantrieb für das rückzuführende Kathodenabgas mittels Druckluftzudosierung, so daß auch für diese Funktion des Brennstoffzellensystems nicht unbedingt elektrisch gespeiste Strömungsantriebskomponenten erforderlich sind. Die teilweise Kathodenabgasrückführung verbessert kathodenseitig die Wasserbilanz des Systems.

Fig. 4 zeigt wiederum schematisch eine Brennstoffzelle 25 mit Kathodenseite 26, Anodenseite 27 und zwischenliegender Membran 28. In die Kathodenseite 26 wird wiederum Luft aus der Umgebung mit Überdruck durch einen Kompressor 29 eingespeist. Anodenseitig wird in diesem Beispiel das an der Anodengasaustrittsseite 27a austretende Anodenabgas über eine Anodengasrückführleitung 30 zur Anodeneintrittsseite 27b rückgeführt. In der Anodengasrückführleitung 30 befindet sich ein Coanda-Strömungsverstärker 31. Dieser ist hochdruckseitig über eine Brenngas-Druckleitung 32 an einen Brenngas-Druckspeicher 33 angeschlossen, in welchem das eingesetzte Brenngas, z.B. Wasserstoff, unter Druck bevorratet wird. Der Wasserstoff kann dabei gasförmig oder flüssig sein.

Im Betrieb gelangt das Brenngas aus dem Druckspeicher 33 mit ausreichendem Druck in den Coanda-Strömungsverstärker 31, in welchem es den rückgeführten Anodengasstrom antreibt und dem zirkulierenden anodenseitigen Gasstrom der Brennstoffzelle 25, zudosiert wird. Der Coanda-Strömungsverstärker 31 macht in diesem Fall elektrsche Brenngaszudosierkomponenten entbehrlich.

Erste Erprobungen von Coanda-Strömungsverstärkern an den erfindungsgemäßen Stellen eines Brennstoffzellensystems, von denen einige wichtige in den oben beschriebenen Ausführungsbeispielen illustriert sind, zeigen eine überraschend gute Wirkung, die es im allgemeinen erlaubt, an der betreffenden Stelle auf elektrische Strömungsantriebskomponenten, wie Lüfter, Gebläse und Ventilatoren, zu verzichten. Dies hat bei einem Einsatz in explosionsgefährdeten Bereichen den günstigen Effekt, daß keine aufwendigen Schutzmaßnahmen nötig sind. Des weiteren entfällt ein entsprechender Verkabelungs- und Steuerungsaufwand von elektrischen Strömungsantriebskomponenten. Das Ausfallrisiko von Coanda-Strömungsverstärkern ist äußerst gering, da sie keine bewegten Teile enthalten. Als weiteren Vorteil haben Verunreinigungen des Mediums, wie z.B. Wassertropfen, keinen nennenswerten Einfluß auf die Funktionsweise eines Coanda-Strömungsverstärkers. Der Coanda-Strömungsverstärker erlaubt üblicherweise eine Verstärkung des angetriebenen Gasmassenstroms um einen Faktor zehn bis dreißig. Es versteht sich, dass je nach Bedarf das Brennstoffzellensystem mit mehreren Coanda-Strömungsverstärkern an den in den Figuren 1 bis 4 veranschaulichten Positionen ausgerüstet sein kann.

Weiterhin können neben der Brennstoffzellenbox auch andere Gehäuse bzw. Boxen im Brennstoffzellensystem vorgesehen sind, in denen Komponenten des Brennstoffzellensystems zusammengefaßt sind. Auch dort können Belüftungsmittel vorgesehen sein, welche vorteilhaft einen Coanda-Strömungsverstärker aufweisen, um explosionsgefährdete Bereiche bzw. Boxen durchzuspülen. So kann der Coanda-Strömungsverstärker auch im Bereich von Peripherieaggregaten der Brennstoffzelle und/oder im Bereich der Abgasreinigung des Brennstoffzellensystems außerhalb der Brennstoffzellenbox eingesetzt werden.

## Patentansprüche

1. Brennstoffzellensystem mit
- wenigstens einer in eine Brennstoffzellenbox (1) eingebrachten Brennstoffzelleneinheit,
**gekennzeichnet durch**
- Boxbelüftungsmittel mit einer in die Brennstoffzellenbox (1) einmündenden Spülgaszufuhrleitung (2) und einer aus der Brennstoffzellenbox ausmündenden Spülgasauslassleitung (3), wobei sich in der Spülgaszufuhrleitung und/oder in der Spülgasauslaßleitung ein Coanda-Strömungsverstärker (4, 4', 4'') befindet-. und/oder
- Belüftungsmittel für ein Gehäuse außerhalb der Brennstoffzellenbox (1), in welchem Komponenten des Brennstoffzellensystems zusammengefaßt sind, wobei die Belüftungsmittel einen Coanda-Strömungsverstärker aufweisen.

2. Brennstoffzellensystem, insbesondere nach Anspruch 1, mit
- wenigstens einer Brennstoffzelleneinheit und einer zugeordneten Kathodengas- und/oder einer Kaltstartgas-Zufuhrleitung,
**gekennzeichnet durch**
- einen Coanda-Strömungsverstärker (7) in der Kathodengas- und/oder in der Kaltstartgas-Zufuhrleitung.

3. Brennstoffzellensystem nach Anspruch 2, weiter
**dadurch gekennzeichnet, daß**
dem Coanda-Strömungsverstärker (7) hochdruckseitig ein Hochdruckverdichter (10) vorgeschaltet ist.

4. Brennstoffzellensystem, insbesondere nach einem der Ansprüche 1 bis 3, mit
- wenigstens einer Brennstoffzelleneinheit (11) mit zugeordneter Kathodenabgasrückführleitung (21) zur wenigstens teilweisen Rückführung von Kathodenabgas zur Kathodeneintrittsseite,
**gekennzeichnet durch**
- einen in der Kathodenabgasrückführleitung (21) angeordneten Coanda-Strömungsverstärker (23), der hochdruckseitig an eine Druckluftleitung (24) angeschlossen ist.

5. Brennstoffzellensystem, insbesondere nach einem der Ansprüche 1 bis 4, mit
- wenigstens einer Brennstoffzelleneinheit (25) mit zugeordneter Anodenabgasrückführleitung (30),
**gekennzeichnet durch**
- einen in der Anodenabgasrückführleitung (30) angeordneten Coanda-Strömungsverstärker (31), der hochdruckseitig an einen Brennstoff-Gasspeicher (33) angeschlossen ist.
